(19) Europäisches Patentamt / European Patent Office / Office européen des brevets

(11) **EP 1 908 297 B1**

(12) **FASCICULE DE BREVET EUROPEEN**

(45) Date de publication et mention
de la délivrance du brevet:
**09.12.2009 Bulletin 2009/50**

(21) Numéro de dépôt: **06792585.9**

(22) Date de dépôt: **27.07.2006**

(51) Int Cl.:
*H04N 7/26* (2006.01)     *H04N 7/46* (2006.01)
*H04N 7/50* (2006.01)     *H04N 7/01* (2006.01)

(86) Numéro de dépôt international:
**PCT/EP2006/064737**

(87) Numéro de publication internationale:
**WO 2007/012659 (01.02.2007 Gazette 2007/05)**

(54) **DISPOSITIF DE GENERATION D'UNE IMAGE INTERPOLEE**

VORRICHTUNG ZUR ERZEUGUNG EINES INTERPOLIERTEN BILDES

DEVICE FOR GENERATING AN INTERPOLATED FRAME

(84) Etats contractants désignés:
**DE FR GB**

(30) Priorité: **28.07.2005 FR 0552362**

(43) Date de publication de la demande:
**09.04.2008 Bulletin 2008/15**

(73) Titulaire: **Thomson Licensing**
**92100 Boulogne-Billancourt (FR)**

(72) Inventeurs:
• **KERVEC, Jonathan**
**F-35380 Paimpont (FR)**
• **DOYEN, Didier**
**F-35340 La Bouexiere (FR)**
• **GUERMOUD, Hassane**
**F-35000 Rennes (FR)**

(74) Mandataire: **Le Dantec, Claude**
**Thomson**
**European Patent Operations**
**46 Quai Alphonse Le Gallo**
**92648 Boulogne-Billancourt (FR)**

(56) Documents cités:
**EP-A- 0 957 367      EP-A1- 0 390 660**
**EP-A2- 0 360 413**

• **TUBARO S ET AL: "Motion Field Estimators and their Application to Image Interpolation" MOTION ANALYSIS AND IMAGE SEQUENCE PROCESSING, 1993, pages 153-187, XP002150854**
• **HAAN DE G ET AL: "Deinterlacing - An Overview" PROCEEDINGS OF THE IEEE, vol. 86, no. 9, 1 septembre 1998 (1998-09-01), pages 1839-1857, XP011044084 IEEE, New York, US ISSN: 0018-9219**
• **JELENA KOVACEVIC ET AL: "Deinterlacing by Successive Approximation" IEEE TRANSACTIONS ON IMAGE PROCESSING, vol. 6, no. 2, février 1997 (1997-02), XP011026110 IEEE, Piscataway, US ISSN: 1057-7149**
• **BOCK A M: "MOTION-ADAPTIVE STANDARDS CONVERSION BETWEEN FORMATS OF SIMILAR FIELD RATES" SIGNAL PROCESSING. IMAGE COMMUNICATION, ELSEVIER SCIENCE PUBLISHERS, AMSTERDAM, NL, vol. 6, no. 3, 1 juin 1994 (1994-06-01), pages 275-280, XP000451931 ISSN: 0923-5965**

**Description**

La présente invention se situe dans le domaine du traitement d'images ou de vidéo et plus particulièrement dans le domaine de l'interpolation vidéo. Elle concerne un dispositif d'interpolation d'images, lequel est mis en oeuvre ou inséré dans tout type de dispositif d'affichage d'image tels que les panneaux d'affichage au plasma, les dispositifs à cristaux liquides ou les écrans à tube cathodique.

Les techniques classiques d'interpolation d'images compensées en mouvement nécessitent l'utilisation d'un estimateur de mouvement. Cet estimateur calcule un vecteur de mouvement pour chaque pixel de l'image à interpoler à partir des images source "encadrant" temporellement l'image à interpoler et éventuellement de vecteurs de mouvement estimés précédemment. Ce vecteur de mouvement peut être calculé de plusieurs façons possibles :

- soit on estime d'abord un vecteur de mouvement pour chaque pixel de l'une des deux images source encadrant l'image à interpoler puis on en déduit le vecteur de mouvement d'un pixel de l'image à interpoler en lui attribuant le vecteur de mouvement estimé de l'image source traversant ou passant à proximité du pixel considéré de l'image à interpoler,
- soit on estime directement un vecteur de mouvement pour les pixels de l'image à interpoler à partir de l'une ou des deux images source l'encadrant et de vecteurs de mouvement estimés précédemment.

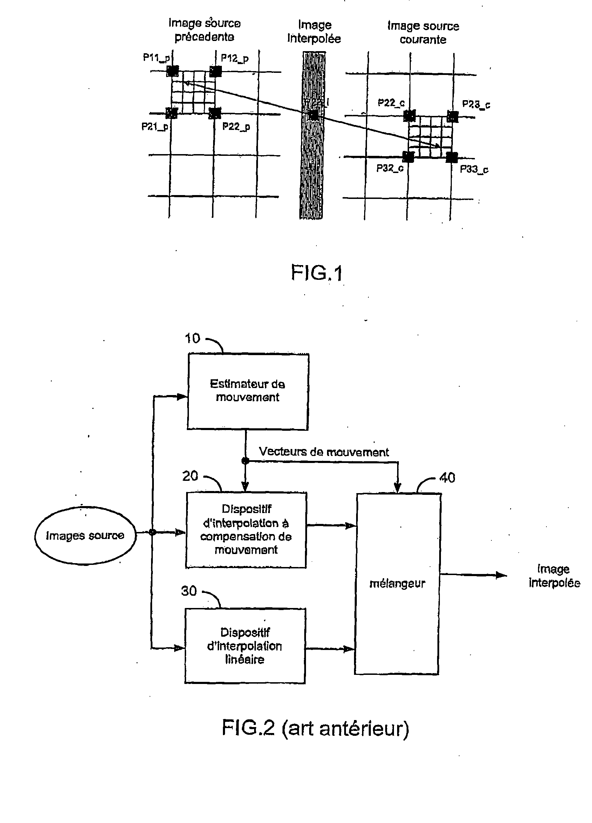

L'interpolation vidéo compensée en mouvement se fait ensuite dans la direction du mouvement en se basant sur les informations vidéo d'au moins l'une des deux images source encadrant l'image à interpoler et sur les vecteurs de mouvement calculés pour l'image à interpoler. La figure 1 illustre la façon dont est interpolée une image intercalée entre une image source précédente et une image source courante. Dans cet exemple, l'image interpolée est située temporellement à mi-distance entre l'image source précédente et l'image source courante. Cette interpolation est classiquement employée pour modifier la fréquence d'affichage de la séquence vidéo et la faire passer par exemple de 50 Hz à 100Hz. Dans cet exemple, le vecteur de mouvement estimé pour le pixel P22_i de l'image interpolée pointe à une extrémité sur un point situé entre les pixels P11_p, P12_p, P21_p, P22_p de l'image source précédente et à l'autre extrémité sur un point situé entre les pixels P22_c, P23_c, P32_c, P33_c de l'image source courante. L'information vidéo qui est affectée au pixel P22_i est alors une combinaison des informations vidéo des pixels P11_p, P12_p, P21_p, P22_p, P22_c, P23_c, P32_c et P33_c.

En théorie, cette interpolation compensée en mouvement donne de bons résultats. En pratique, les défaillances de l'estimateur de mouvement dans certaines zones de l'image, notamment les zones qui se recouvrent ou se découvrent, engendrent des défauts perceptibles lors de l'affichage de la séquence vidéo interpolée compensée en mouvement et cela quelle que soit la complexité de l'algorithme. C'est pourquoi l'interpolateur ne doit pas uniquement délivrer la séquence compensée en mouvement. Il peut être préférable de délivrer, pour certaines portions de la séquence vidéo d'entrée, une séquence interpolée obtenue par un filtrage linéaire de la séquence vidéo d'entrée dans le domaine spatial et/ou temporel ou une combinaison (ou mélange) entre la séquence interpolée compensée en mouvement et la séquence interpolée obtenue par filtrage. Un dispositif mettant en oeuvre un tel procédé est représenté à la figure 2. Il comprend un estimateur de mouvement 10 pour estimer un vecteur de mouvement pour chacun des pixels de l'image à interpoler à partir d'images source encadrant ladite image à interpoler. Un dispositif d'interpolation à compensation de mouvement 20 est prévu pour générer une image interpolée compensée en mouvement à partir des images source et des vecteurs de mouvement estimés pour chacun des pixels de l'image interpolée. Un dispositif d'interpolation linéaire 30 est prévu pour générer une seconde image interpolée par filtrage linéaire des images source l'encadrant. Un mélangeur 40 est présent en sortie des dispositifs d'interpolation 20 et 30 pour générer une image interpolée finale qui est un mélange de l'image interpolée compensée en mouvement et de l'image interpolée obtenue par filtrage linéaire des images source. Ce mélange est opéré en affectant des coefficients de mélange (ou de pondération) à chacune des deux images interpolées, et plus précisément à chacun des pixels desdites images interpolées. Ces coefficients de mélange sont déterminés par le mélangeur 40 par exemple en fonction de l'amplitude de l'amplitude du vecteur de mouvement du pixel considéré. Par exemple, plus le mouvement est rapide, plus le coefficient de pondération appliquée à l'image obtenue par filtrage linéaire est faible et plus le coefficient de pondération appliquée à l'image compensée en mouvement est élevé, la somme de ces deux coefficients de pondération étant égale à 1.

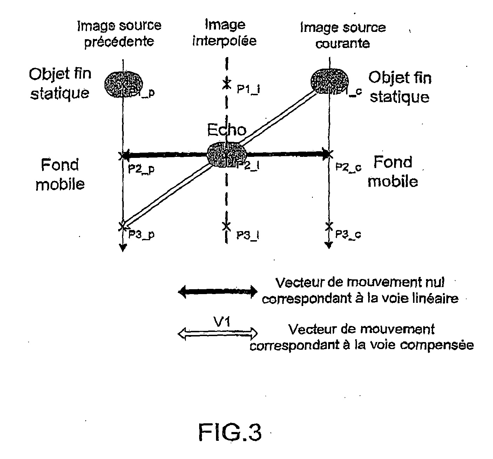

Ce dispositif ne fonctionne pas correctement quand les vecteurs de mouvement estimés sont défaillants et que ces derniers pointent sur des pixels ayant des informations vidéo très différentes. La figure 3 illustre un tel cas. Un objet fin statique sur un fond mobile est affiché sur une image source précédente représentée par 3 pixels P1_p, P2_p, P3_p et une image source courante représentée par 3 pixels P1_c, P2_c, P3_c. Par souci de simplification, les images sont représentées sur une seule dimension. On cherche à générer une image interpolée représenté par 3 pixels P1_i P2_i, P3_i entre l'image source précédente et l'image source courante. L'objet fin statique est affiché sur le pixel P1_p de l'image source précédente et le pixel p1_c de l'image source courante. L'estimateur de mouvement a fourni un vecteur de mouvement V1 défaillant pour le pixel P2_i. Si on utilise le dispositif de la figure 2 et que V1 est supérieur à un seuil à partir duquel l'image compensée en mouvement est privilégié en sortie de dispositif (coefficient de pondération élevée pour l'image compensée en mouvement), alors on ramène le niveau vidéo de l'objet statique sur le pixel p2_i, ce qui crée un écho.

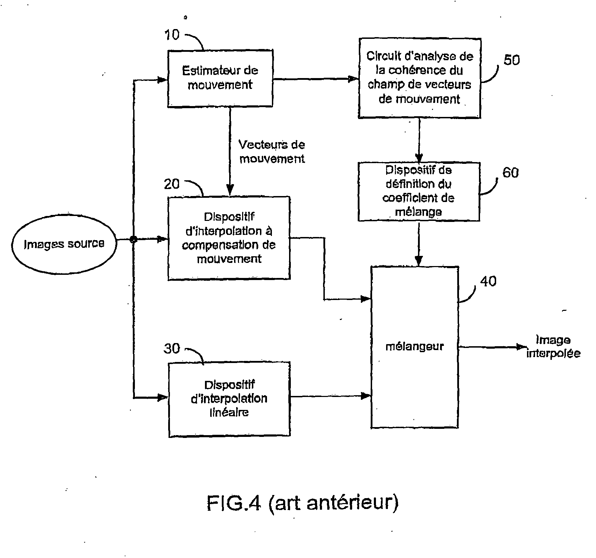

Il existe toutefois des dispositifs comme celui montré à la figure 3 pour améliorer le mélange qui est divulgué dans le brevet Européen EP 0 390 660. Les éléments de ce dispositif qui sont déjà présents dans la figure 2 sont identifiés avec la même référence dans la figure 4. La séquence d'images source est appliquée simultanément à un estimateur de mouvement 10, à un dispositif d'interpolation à compensation de mouvement 20, et à un dispositif d'interpolation linéaire 30. Le dispositif d'interpolation à compensation de mouvement 20 traite les images sources à partir de vecteurs de mouvement reçues de l'estimateur de mouvement 10. Une sortie de l'estimateur de mouvement 10 qui fournit le champ de vecteurs de mouvement est reliée à un circuit 50 d'analyse de cohérence du champ de vecteurs de mouvement dont la structure est donnée en détail dans le brevet EP 0 390 660. Ce circuit délivre par exemple en sortie une matrice binaire de cohérence, dans laquelle sont marqués les vecteurs mouvement défectueux. Cette matrice binaire est appliquée à un circuit 60 de définition des coefficients de mélange à appliquer à un mélangeur 60 recevant par ailleurs les informations vidéo issues du dispositif d'interpolation à compensation de mouvement 20 et celles reçues du dispositif d'interpolation linéaire 30. Les coefficients de mélange à informations vidéo provenant des dispositifs d'interpolation 20 et 30 sont déterminés en fonction du contenu de la matrice. Si le vecteur de mouvement du pixel courant de l'image à interpoler est considéré comme défectueux, le coefficient de mélange i affecté à la voie compensée en mouvement sera faible et le coefficient 1-i affecté à la voie linéaire sera plus élevé. Le mélangeur 60 délivre alors une séquence d'images interpolées qui est un mélange de la séquence délivrée par le dispositif 20 et de la séquence délivrée par le dispositif 30.

La présente invention propose une autre solution permettant de pallier aux défaillances de l'estimateur de mouvement qui est plus simple à mettre en oeuvre. De manière plus générale, l'invention a pour but de réduire les défauts engendrés par la compensation de mouvement effectuée dans les zones critiques pour l'estimation de mouvement, à savoir les zones n'ayant pas de continuité temporelle, notamment les zones qui apparaissent ou disparaissent d'une image à l'autre.

La présente invention concerne un dispositif de génération d'une image interpolée à partir d'images source l'encadrant temporellement, comportant :

- des moyens d'estimation d'un vecteur de mouvement pour au moins un pixel courant de l'image à interpoler à partir desdites images source,
- des moyens d'interpolation à compensation de mouvement pour générer une première image interpolée compensée en mouvement, les caractéristiques du pixel courant de ladite première image interpolée étant déterminées à partir des caractéristiques des pixels des images source déterminés par le vecteur de mouvement estimé pour ledit pixel courant,
- des moyens d'interpolation linéaire pour générer une deuxième image interpolée par filtrage linéaire entre les pixels de mêmes coordonnées que le pixel courant dans les images source,
- des moyens de mélange pour mélanger, pour chaque pixel courant de l'image à interpoler, les caractéristiques des pixels de mêmes coordonnées dans lesdites première et deuxième images interpolées de manière à générer ladite image interpolée, un coefficient de mélange ($\alpha$, 1-$\alpha$) étant affecté à chacune desdites première et deuxième images interpolées pour chaque pixel courant.

Ce dispositif est remarquable en ce qu'il comporte en outre de moyens de calcul, pour chaque pixel courant de l'image interpolée, d'une première valeur de différence d'image (DFD) entre les pixels des images source déterminés par le vecteur de mouvement estimé pour ledit pixel courant et d'une deuxième valeur de différence d'image (FD) entre les pixels de mêmes coordonnées que le pixel courant dans les images source, et en ce que les moyens de mélange déterminent les coefficients de mélange, pour chaque pixel courant de l'image interpolée, en fonction de ladite première valeur de différence d'image (DFD) et/ou deuxième valeur de différence d'image (FD) calculées pour ce pixel et/ou du vecteur de mouvement estimé.

Selon l'invention, le coefficient de mélange affecté à ladite deuxième image interpolée est égal au rapport de la première valeur de différence d'image (DFD) sur la somme des première (DFD) et deuxième (FD) valeurs de différence d'image et la somme des coefficients de mélange appliqués aux première et deuxième images interpolées est égale à 1.

En pratique, si l'image source comporte plusieurs composantes couleur, par exemple R, V et B, le dispositif génère alors une image interpolée pour chacune desdites composantes couleur. Dans ce cas, un coefficient de mélange est calculé pour chacune des composantes couleur à partir des images source relatives à cette composante couleur et, pour éviter l'apparition d'un effet coloré qui serait à une différence de traitement entre les différentes composantes couleur, la valeur maximale ($\alpha_{max}$) de ces coefficients de mélange est affectée à la deuxième image interpolée de chaque composante couleur pour le mélange.

De préférence, cette valeur maximale est pondérée par une fonction de régularisation g destinée à privilégier la première image interpolée par rapport à la deuxième image interpolée lorsque les première (DFD) et deuxième (FD) valeurs de différence d'image sont faibles.

L'invention sera mieux comprise à la lecture de la description qui va suivre, donnée à titre d'exemple non limitatif, et en référence aux dessins annexés parmi lesquels :

- la figure 1, déjà décrite, illustre la génération d'une image interpolée à partir de deux images source,
- la figure 2, déjà décrite, représente un premier dispositif d'interpolation conforme à l'art antérieur,
- la figure 3, déjà décrite, illustre les défauts du dispositif de la figure 2,
- la figure 4, déjà décrite, représente un deuxième dispositif d'interpolation conforme à l'art antérieur,
- la figure 5 représente un premier dispositif de génération d'image interpolée conforme à l'invention, et
- la figure 6 représente un second dispositif de génération d'image interpolée conforme à l'invention, et
- la figure 7 est une courbe graphique représentant une fonction de pondération à appliquer au coefficient de mélange associée à l'image compensée en mouvement, et
- la figure 8 représente un dispositif montrant le traitement de chacune des composantes couleur des images source.

Selon l'invention, les coefficients de mélange affectés à l'image interpolée compensée en mouvement et à l'image interpolée linéairement sont déterminés pour chaque pixel de l'image à interpoler en fonction d'une différence d'image déplacée ou DFD (pour Displaced Frame Différence en langue anglaise) entre les pixels associés des images source déterminés par le vecteur de mouvement estimé pour ledit pixel courant et/ou d'une deuxième différence d'image ou FD (pour Frame Différence en langue anglaise) entre les pixels de mêmes coordonnées que le pixel courant dans les images source et/ou du vecteur de mouvement estimé pour ledit pixel courant.

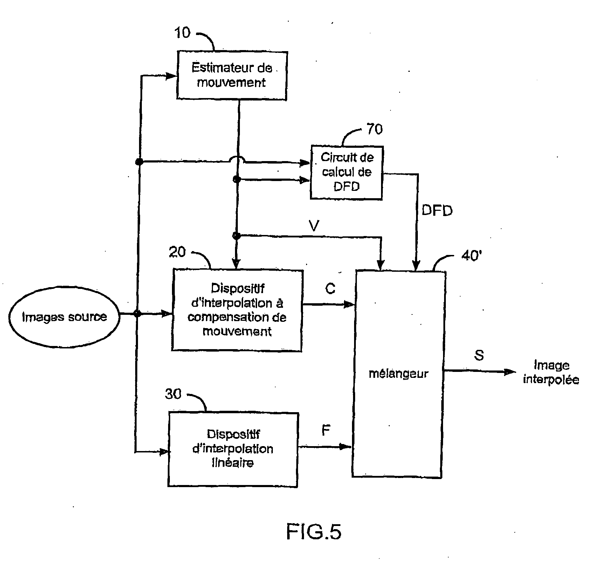

Un premier mode réalisation d'un dispositif conforme à l'invention est illustré par la figure 5. Les éléments identiques à ceux de la figure 2 ou 4 portent les mêmes références numériques. La séquence d'images source est appliquée simultanément à un estimateur de mouvement 10, à un dispositif d'interpolation à compensation de mouvement, 20, et à un dispositif d'interpolation linéaire 30. L'estimateur de mouvement 10 génère un vecteur de mouvement pour chaque un pixel courant de l'image à interpoler à partir des images source précédente et courante encadrant cette image. Le dispositif 20 génère à partir de ces images source courante et précédente une première image interpolée compensée en mouvement, les caractéristiques du pixel courant de cette première image interpolée étant déterminées à partir des caractéristiques des pixels des images source déterminés par le vecteur de mouvement estimé pour le pixel courant. Si le vecteur de mouvement estimé ne pointe pas, dans les images source, sur un pixel particulier mais sur un point image situé entre plusieurs pixels, on pourra utiliser les caractéristiques du plus proche voisin ou faire une moyenne ou une interpolation bilinéaire des pixels les plus proches. Le dispositif 30 génère une deuxième image interpolée par filtrage linéaire entre les pixels de mêmes coordonnées que le pixel courant dans les images source. Un circuit de calcul 70 est prévu pour calculer, pour chaque pixel courant de l'image interpolée, une valeur de différence d'image (correspondant à une DFD) entre les pixels des images source déterminés par le vecteur de mouvement estimé pour ledit pixel courant. Un calcul de DFD est généralement déjà effectué dans l'estimateur de mouvement. Par conséquent, ce circuit de calcul 70 peut être partie intégrante de l'estimateur de mouvement 10. Un mélangeur 40' est enfin prévu pour mélanger, pour chaque pixel courant de l'image à interpoler, les caractéristiques des pixels de mêmes coordonnées dans les première et deuxième images interpolées de manière à générer l'image interpolée. Pour cette opération, un coefficient de mélange, pour chaque pixel courant, est affecté à chacune des première et deuxième images interpolées. Dans le mode de réalisation représenté par cette figure, les coefficients de mélange sont déterminés, pour chaque pixel courant de l'image interpolée, en fonction de la valeur de différence d'image DFD calculée par le circuit 70 et/ou du vecteur de mouvement estimé pour ce pixel.

Le mélange réalisé dans le circuit 40' est par exemple le suivant, pour un pixel donné de l'image interpolée:

$$S = (1-\alpha)^*C + \alpha^*F$$

où

- S est la valeur du pixel considéré après mélange,
- C est la valeur du pixel considéré de la séquence interpolée compensée en mouvement,
- F est la valeur du pixel considéré de la séquence obtenue par filtrage linéaire,
- $\alpha$ est le coefficient de mélange appliqué au pixel de la séquence obtenue par filtrage linéaire, et
- $1-\alpha$ est le coefficient de mélange appliqué au pixel de la séquence compensé en mouvement.

Le coefficient de mélange $\alpha$ peut être défini de la manière suivante :

$$\alpha = k*(1+V^2)*DFD$$

où k est un coefficient multiplicateur permettant de modifier la résolution du coefficient $\alpha$ et/ou privilégier la voie linéaire par rapport à la voie compensée en mouvement,

V est l'amplitude du vecteur de mouvement, et

DFD est la différence d'image déplacée pour le pixel considéré.

Ainsi, selon l'invention, si les informations vidéo des pixels pointés par le vecteur de mouvement sont proches, i.e leur différence DFD est faible, cela signifie que le vecteur de mouvement estimé est correct et que l'image interpolée compensée en mouvement sera privilégiée (le coefficient 1-$\alpha$ est élevé) à la sortie du mélangeur. A l'inverse, si la différence DFD est élevée, le vecteur de mouvement estimé n'est pas très bon et l'image interpolée obtenue par filtrage est privilégiée (le coefficient $\alpha$ est élevé).

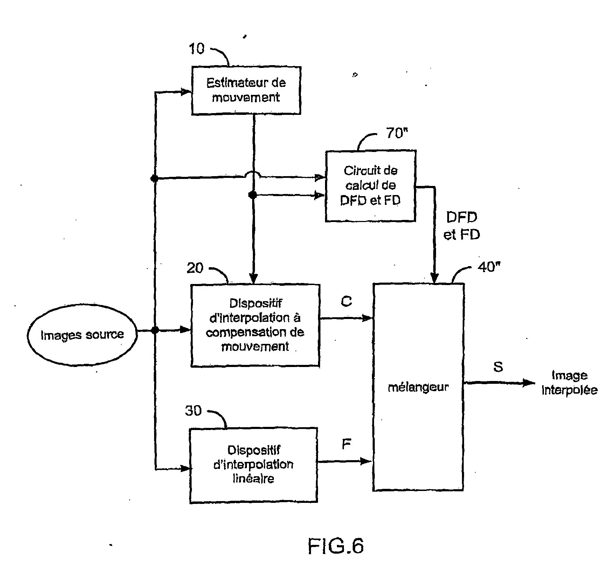

Une deuxième forme réalisation de dispositif est proposée à la figure 6. Les éléments identiques à ceux de la figure 5 portent les mêmes références numériques. La séquence d'images source est appliquée simultanément à un estimateur de mouvement 10, à un dispositif d'interpolation à compensation de mouvement 20, et à un dispositif d'interpolation linéaire 30. L'estimateur de mouvement 10 génère un vecteur de mouvement pour chaque un pixel courant de l'image à interpoler à partir des images source précédente et courante encadrant cette image. Le dispositif 20 génère à partir de ces images source courante et précédente une première image interpolée compensée en mouvement, les caractéristiques du pixel courant de cette première image interpolée étant déterminées à partir des caractéristiques des pixels des images source déterminés par le vecteur de mouvement estimé pour le pixel courant. Si le vecteur de mouvement estimé ne pointe pas, dans les images source, sur un pixel particulier mais sur un point image situé entre plusieurs pixels, on pourra utiliser les caractéristiques du plus proche voisin ou faire une moyenne ou une interpolation bilinéaire des pixels les plus proches. Le dispositif 30 génère une deuxième image interpolée par filtrage linéaire entre les pixels de mêmes coordonnées que le pixel courant dans les images source. Un circuit de calcul 70' est prévu pour calculer, pour chaque pixel courant de l'image interpolée, une première valeur de différence d'image (correspondant à une DFD) entre les pixels des images source déterminés par le vecteur de mouvement estimé pour ledit pixel courant et une deuxième valeur de différence d'image (correspondant à une FD) entre les pixels de mêmes coordonnées que le pixel courant dans les images source, Un calcul de DFD est généralement déjà effectué dans l'estimateur de mouvement. Par conséquent, ce circuit de calcul 70 peut être partie intégrante de l'estimateur de mouvement 10. Un mélangeur 40" est enfin prévu pour mélanger, pour chaque pixel courant de l'image à interpoler, les caractéristiques des pixels de mêmes coordonnées dans les première et deuxième images interpolées de manière à générer l'image interpolée. Pour cette opération, un coefficient de mélange, pour chaque pixel courant, est affectée à chacune des première et deuxième images interpolées. Dans le mode de réalisation représenté par cette figure, les coefficients de mélange sont déterminés, pour chaque pixel courant de l'image interpolée, en fonction de la valeur de différence d'image DFD et/ou de la deuxième valeur de différence FD calculées par le circuit 70.

Le mélange réalisé dans le circuit 40" est le même que celui réalisé par le circuit 40' pour un pixel donné de l'image interpolée, à savoir :

$$S = (1-\alpha)*C+\alpha*F$$

où

- S est la valeur du pixel considéré après mélange,
- C est la valeur du pixel considéré de la séquence interpolée compensée en mouvement,
- F est la valeur du pixel considéré de la séquence obtenue par filtrage linéaire,
- $\alpha$ est le coefficient de mélange appliqué au pixel de la séquence obtenue par filtrage linéaire, et
- 1-$\alpha$ est le coefficient de mélange appliqué au pixel de la séquence compensé en mouvement.

Le coefficient de mélange $\alpha$ est toutefois déterminé de façon différente puisqu'il est fonction des valeurs de DFD et FD calculés pour le pixel courant :

$$\alpha = \frac{DFD}{DFD+FD}$$

Par ailleurs, si on considère que chaque image source comprend au moins deux composantes couleur, par une composante rouge R, une composante verte V et une composante bleue B, l'interpolation doit être opérée sur chacune des composantes. Un calcul des différences d'image DFD et FD est effectué séparément sur chacune des composantes couleur du signal vidéo. Un coefficient de mélange $\alpha$ est alors déterminé pour chacune des composantes. Il est alors possible:

- soit de traiter séparément chacune des composantes couleur et donc de générer une image interpolée pour chacune de ces composantes sans tenir compte des autres composantes; un coefficient noté $\alpha_{rouge}$, $\alpha_{vert}$, $\alpha_{bleu}$ est calculé pour chacune des composantes rouge, verte et bleue respectivement puis utilisé pour générer l'image interpolée rouge, verte et bleue;
- soit de les traiter globalement et de générer une image interpolée pour chacune de ces composantes en tenant compte des autres composantes; cette deuxième possibilité est la plus avantageuse car elle peut éviter l'apparition d'effet coloré si on le même coefficient $\alpha$ pour les trois composantes couleur; ce coefficient est de préférence la valeur maximale des coefficients $\alpha_{rouge}$, $\alpha_{vert}$, $\alpha_{bleu}$; ce coefficient commun est noté $\alpha_{max}$ avec $\alpha_{max}=\max(\alpha_{rouge}, \alpha_{vert}, \alpha_{bleu})$; la voie linéaire est ainsi privilégiée lorsque l'on fait une erreur sur l'une des composantes (plus $\alpha$ est grand, plus la proportion de la voie linéaire est importante dans le résultat final )

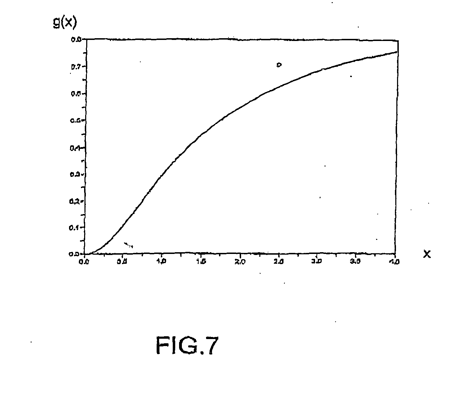

Comme le calcul des coefficients $\alpha$ dépend directement des valeurs de DFD et FD, une fonction de régularisation g est avantageusement introduite dans ce calcul pour privilégier la voie compensée lorsque les deux valeurs de DFD et FD sont faibles. Cette fonction est croissante et comprise entre 0 et 1 (seuillage « doux »). La fonction g est par exemple est du type $g(x)=1-\dfrac{1}{\sqrt{1+x^2}}$ où x est la somme desdites première et deuxièmes valeurs de différence d'image. La courbe de cette fonction est représentée à la figure 7.

L'interpolation finale s'écrit alors S = $(1-\alpha)^*C+\alpha^*F$ avec

$$\text{avec } \alpha=g(DFD+FD)^*\alpha_{max}=g(DFD+FD)^*\max(\alpha_{rouge}, \alpha_{vert}, \alpha_{bleu})$$

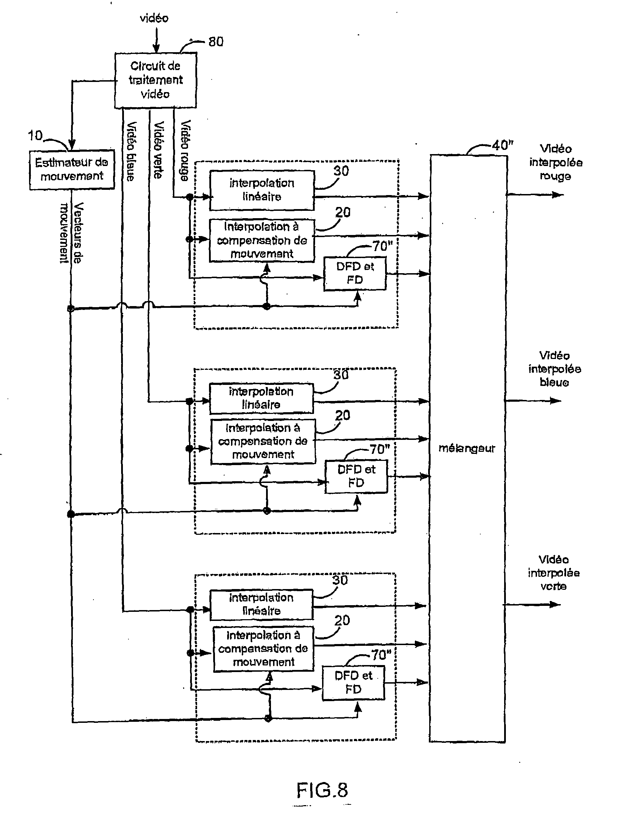

Un dispositif apte à mettre en oeuvre ce mode de réalisation est montré à la figure 8. Les éléments déjà présents dans les figures précédentes sont identifiés par les mêmes références numériques. Le signal vidéo de la séquence d'images source est transformé par un circuit de traitement vidéo 80 en 3 signaux représentant chacun une composante couleur R, V et B. Ce signal vidéo est également appliqué à un estimateur de mouvement 10. Les signaux rouge, vert et bleu sont ensuite traités séparément par un bloc distinct comportant un dispositif d'interpolation à compensation de mouvement 20, un dispositif d'interpolation linéaire 30 et un circuit de calcul 70" de DFD et de FD. Ces moyens sont connectés entre comme montré à la figure 6. Les dispositifs 20 de chaque bloc reçoivent les vecteurs de mouvement générés par l'estimateur de mouvement 10 et traitent les signaux de couleur à partir de ces vecteurs. La sortie des dispositifs 20 et 30 et du circuit de calcul 70" de chaque bloc est connectée à un mélangeur 40" apte à mettre en oeuvre l'interpolation présenté au paragraphe précédent.

Les intérêts de ces différents dispositifs sont multiples :

- il permet d'avoir une continuité temporelle de la compensation, à savoir que les niveaux vidéo sont toujours proches dans la direction du mouvement,
- le résultat final tient compte à la fois de l'erreur dans la direction du mouvement mais également de l'erreur de la voie linéaire,
- il réduit considérablement les erreurs dues aux mises en défaut de l'estimateur;
- il limite les échos colorés à la jonction des zones de mouvement différents, et
- il peut s'appliquer à tous les types de conversions, par exemple : 50->60Hz, 50->75Hz, 50->100Hz et inversement.

Bien entendu, l'invention ne se limite pas aux modes de réalisation décrits précédemment.

En particulier, l'homme du métier pourra employer d'autres coefficients de mélange et/ou fonctions de pondération.

**Revendications**

1. Dispositif de génération d'une image interpolée à partir d'images source l'encadrant temporellement, comportant :

- des moyens (10) d'estimation d'un vecteur de mouvement pour au moins un pixel courant de l'image à interpoler à partir desdites images source,
- des moyens d'interpolation à compensation de mouvement (20) pour générer une première image interpolée compensée en mouvement, les caractéristiques du pixel courant de ladite première image interpolée étant déterminées à partir des caractéristiques des pixels des images source déterminés par le vecteur de mouvement estimé pour ledit pixel courant,
- des moyens d'interpolation linéaire (30) pour générer une deuxième image interpolée par filtrage linéaire entre les pixels de mêmes coordonnées que le pixel courant dans les images source,
- des moyens (40;40") de mélange pour mélanger, pour chaque pixel courant de l'image à interpoler, les caractéristiques des pixels de mêmes coordonnées dans lesdites première et deuxième images interpolées de manière à générer ladite image interpolée, un coefficient de mélange $\alpha$, 1-$\alpha$ étant affecté à chacune desdites première et deuxième images interpolées pour chaque pixel courant,
- des moyens (70,70") de calcul, pour chaque pixel courant de l'image interpolée, d'une première valeur de différence d'image (DFD) entre les pixels des images source déterminés par le vecteur de mouvement estimé pour ledit pixel courant et d'une deuxième valeur de différence d'image (FD) entre les pixels de mêmes coordonnées que le pixel courant dans les images source,
- les moyens de mélange (40;40") déterminent les coefficients de mélange ($\alpha$, 1-$\alpha$), pour chaque pixel courant de l'image interpolée, en fonction de ladite première valeur de différence d'image (DFD) et/ou deuxième valeur de différence d'image (FD) calculées pour ce pixel et/ou du vecteur de mouvement estimé, **caractérisé en ce que** le coefficient de mélange affecté à ladite deuxième image interpolée est égal au rapport de la première valeur de différence d'image (DFD) sur la somme des première (DFD) et deuxième (FD) valeurs de différence d'image.

2. Dispositif selon la revendication 1, **caractérisé en ce que** la somme des coefficients de mélange appliqués aux première et deuxième images interpolées est égale à 1.

3. Dispositif selon la revendication 1 ou 2, **caractérisé en ce que**, chaque image source comportant aux moins deux composantes couleur (R,V,B), il génère une image interpolée pour chacune desdites composantes couleur.

4. Dispositif selon la revendication 3, **caractérisé en ce qu'**un coefficient de mélange ($\alpha_{rouge}$,$\alpha_{vert}$,$\alpha_{bleu}$) est calculé pour chacune des composantes couleur à partir des images source relatives à cette composante couleur et **en ce que** la valeur maximale ($\alpha_{max}$) desdits coefficients de mélange est affectée à la deuxième image interpolée de chaque composante couleur pour le mélange.

5. Dispositif selon la revendication 4, **caractérisé en ce que** ladite valeur maximale desdits coefficients de mélange appliquée à la deuxième image interpolée de chaque composante couleur est pondérée par une fonction de régularisation (g) pour privilégier la première image interpolée par rapport à la deuxième image interpolée lorsque lesdites première (DFD) et deuxième (FD) valeurs de différence d'image sont faibles.

6. Dispositif selon la revendication 5, **caractérisé en ce que** la fonction de régularisation est du type

$$g(x) = 1 - \frac{1}{\sqrt{1+x^2}}$$ où x est la somme desdites première et deuxième valeurs de différence d'image

**Claims**

1. Device for generating an interpolated frame from source frames temporarily surrounding it, comprising:

- estimating means (10) of a motion vector for at least one current pixel of the frame to interpolate from said source frames,
- motion compensation interpolation means (20) to generate a first motion compensated interpolated frame, the characteristics of the current pixel of the said first interpolated frame being determined from the characteristics of the pixels of the source frames determined by the motion vector estimated for the said current pixel,
- linear interpolation means (30) to generate a second interpolated frame by linear filtering between the pixels of same coordinates as the current pixel in the source frames,
- mixing means (40';40") to mix, for each current pixel of the frame to be interpolated, the characteristics of the pixels of same coordinates in said first and second frames interpolated in such a manner as to generate said interpolated frame, a mixing coefficient ($\alpha$, 1-$\alpha$) being assigned to each of said first and second interpolated frames for each current pixel,
- calculation means (70,70"), for each current pixel of the interpolated frame, of a first frame difference value (DFD) between the pixels of the source frames determined by the estimated motion vector for said current pixel and a second frame difference value (FD) between the pixels of same coordinates as the current pixel in the source frames,
- the mixing means (40';40") determines the mixing coefficients ($\alpha$, 1-$\alpha$), for each current pixel of the interpolated frame, according to the said first frame difference value (DFD) and/or second frame difference value (FD) calculated for this pixel and/or the estimated motion vector,

**characterized in that** the mixing coefficient assigned to said second interpolated frame is equal to the ratio of the first frame difference value (DFD) over the sum of the first (DFD) and second (FD) frame difference values.

2. Device according to claim 1, **characterized in that** the sum of the mixing coefficients applied to the first and second interpolated images is equal to 1.

3. Device according to claim 1 or 2, **characterized in that**, each source frame comprising at least two colour components (R, G, B), it generates an interpolated frame for each of said colour components.

4. Device according to claim 3, **characterized in that** a mixing coefficient ($\alpha_{red}, \alpha_{green}, \alpha_{blue}$) is calculated for each of the colour components from source frames relative to this colour component and **in that** the maximum value ($\alpha_{max}$) of said mixing coefficients is assigned to the second interpolated frame of each colour component for the mixture.

5. Device according to claim 4, **characterized in that** said maximum value of said mixing coefficients applied to the second interpolated frame of each colour component is weighted by a regularisation function (g) to give priority to the second interpolated frame when said first (DFD) and second (FD) frame difference values are low.

6. Device according to claim 5, **characterized in that** the regularisation function is of the type

$$g(x) = 1 - \frac{1}{\sqrt{1 + x^2}}$$ where x is the sum of the said first and second frame difference values.

**Patentansprüche**

1. Vorrichtung zur Erzeugung eines interpolierten Bildes aus es zeitlich umrahmenden Quellbildern mit:

- Mitteln (10) zur Schätzung eines Bewegungsvektors für mindestens einen aktuellen Bildpunkt des aus den Quellbildern zu interpolierenden Bilds,
- Mitteln zur bewegungskompensierten Interpolation (20), um ein erstes bewegungskompensiertes interpoliertes Bild zu erzeugen, wobei die Eigenschaften des aktuellen Bildpunkts des ersten interpolierten Bilds aufgrund der Eigenschaften der durch den für den aktuellen Bildpunkt geschätzten Bewegungsvektor bestimmten Bildpunkte der Quellbilder ermittelt werden,
- Mitteln für eine lineare Interpolation (30), um ein zweites interpoliertes Bild durch lineare Filterung zwischen den Bildpunkten zu erzeugen, die dieselben Koordinaten aufweisen, wie der aktuelle Bildpunkt in den Quellbildern,
- Mischungsmitteln (40'; 40"), um für jeden aktuellen Bildpunkt des zu interpolierenden Bilds die Eigenschaften der Bildpunkte derart zu mischen, die dieselben Koordinaten in dem ersten und in dem zweiten interpolierten Bild aufweisen, dass das interpolierte Bild erzeugt wird, wobei ein Mischungskoeffizient $\alpha$, 1-$\alpha$ jeweils dem ersten und dem zweiten interpolierten Bild für jeden aktuellen Bildpunkt zugeordnet wird,
- Mitteln (70, 70"), um für jeden aktuellen Bildpunkt des interpolierten Bilds einen ersten Bilddifferenzwert (DFD) zwischen den Quellbilder-Bildpunkten, die durch den für den aktuellen Bildpunkt geschätzten Bewegungsvektor bestimmt werden, und einen zweiten Bilddifferenzwert (FD) zwischen den Bildpunkten mit denselben Koordinaten wie der aktuelle Bildpunkt in den Quellbildern zu berechnen,

- Mischungsmitteln (40', 40"), welche die Mischungskoeffizienten ($\alpha$, 1-$\alpha$) für jeden aktuellen Bildpunkt des interpolierten Bilds in Abhängigkeit von dem ersten Bilddifferenzwert (DFD) und/oder dem zweiten Bilddifferenzwert (FD), welche für diesen Bildpunkt berechnet werden, und/oder in Abhängigkeit von dem geschätzten Bewegungsvektor bestimmen,

**dadurch gekennzeichnet, dass** der dem zweiten interpolierten Bild zugeordnete Mischungskoeffizient dem Verhältnis von erstem Bilddifferenzwert (DFD) zu Summe des ersten Bilddifferenzwerts (DFD) und des zweiten Bilddifferenzwerts (FD) gleich ist.

2. Vorrichtung nach Anspruch 1, **dadurch gekennzeichnet, dass** die Summe der Mischungskoeffizienten, die auf das erste und zweite interpolierte Bild angewandt werden, gleich 1 ist.

3. Vorrichtung nach Anspruch 1 oder 2, **dadurch gekennzeichnet, dass**, da jedes Quellbild mindestens zwei Farbkomponenten (R, V, B) aufweist, sie ein interpoliertes Bild für jede der Farbkomponenten erzeugt.

4. Vorrichtung nach Anspruch 3, **dadurch gekennzeichnet, dass** ein Mischungskoeffizient ($\alpha_{rouge}$, $\alpha_{vert}$, $\alpha_{bleu}$) für jede der Farbkomponenten aufgrund der sich auf diese Farbkomponente beziehenden Quellbilder berechnet wird und dass der maximale Wert ($\alpha_{max}$) der Mischungskoeffizienten dem zweiten interpolierten Bild jeder Farbkomponente für die Mischung zugeordnet wird.

5. Vorrichtung nach Anspruch 4, **dadurch gekennzeichnet, dass** der maximale Wert der Mischungskoeffizienten, der auf das zweite interpolierte Bild jeder Farbkomponente angewandt wird, durch eine Regulierungsfunktion (g) gewichtet wird, um das erste interpolierte Bild dem zweiten interpolierten Bild vorzuziehen, wenn der erste Bilddifferenzwert (DFD) und der zweite Bilddifferenzwert (FD) gering sind.

6. Vorrichtung nach Anspruch 5, **dadurch gekennzeichnet, dass** die Regulierungsfunktion eine Funktion des Typs

$$g(x) = 1 - \frac{1}{\sqrt{1 + x^2}}$$ ist, wobei x die Summe des ersten Bilddifferenzwerts und des zweiten Bilddifferenzwerts

ist.

Image source
précédente

Image
Interpolée

Image source
courante

P11_p    P12_p

P21_p    P22_p

P22_c    P23_c

P32_c    P33_c

## FIG.1

10

Estimateur de
mouvement

Vecteurs de mouvement

20

40

Dispositif
d'interpolation à
compensation de
mouvement

Images source

mélangeur

Image
Interpolée

30

Dispositif
d'interpolation
linéaire

## FIG.2 (art antérieur)

Image source
précédente

Image
interpolée

Image source
courante

Objet fin
statique

P1_i

Objet fin
statique

Echo

Fond
mobile

P2_p

P2_i

P2_c

Fond
mobile

P3_p

P3_i

P3_c

Vecteur de mouvement nul
correspondant à la voie linéaire

V1

Vecteur de mouvement
correspondant à la voie compensée

# FIG.3

10

Estimateur de
mouvement

Circuit d'analyse de
la cohérence du
champ de vecteurs
de mouvement
50

Vecteurs de
mouvement

Dispositif de
définition du
coefficient de
mélange
60

20

Dispositif
d'interpolation à
compensation de
mouvement

Images source

40

30

Dispositif
d'interpolation
linéaire

mélangeur

Image
interpolée

FIG.4 (art antérieur)

10

Estimateur de
mouvement

70

Circuit de
calcul de
DFD

DFD

V

20

Images source

Dispositif
d'interpolation à
compensation de
mouvement

C

40'

mélangeur

S

Image
interpolée

30

Dispositif
d'interpolation
linéaire

F

FIG.5

10

Estimateur de
mouvement

70"

Circuit de
calcul de
DFD et FD

DFD
et FD

20

Dispositif
d'interpolation à
compensation de
mouvement

C

40"

Images source

mélangeur

S

Image
interpolée

30

Dispositif
d'interpolation
linéaire

F

FIG.6

FIG.7

FIG.8

**EP 1 908 297 B1**

## RÉFÉRENCES CITÉES DANS LA DESCRIPTION

**Documents brevets cités dans la description**

- EP 0390660 A